# EUROPÄISCHE PATENTANMELDUNG

(11) **EP 4 088 833 A1**
(43) Veröffentlichungstag der Anmeldung: **16.11.2022**
(21) Anmeldenummer: 21173567.5
(22) Anmeldetag: 12.05.2021
(51) Int. Cl.: B21D 5/02, B21D 55/00, F16P 3/04, B30B 15/28, G01V 8/12

(54) **BIEGEMASCHINE, INSBESONDERE ABKANTPRESSE, MIT EINEM SICHERHEITSSYSTEM**

(71) Anmelder: Bystronic Laser AG, 3362 Niederönz (CH)
(72) Erfinder: WOIDASKY, Lars, 99867 Gotha (DE); WENIG, Ronny, 99867 Gotha (DE)
(74) Vertreter: Fink Numrich Patentanwälte PartmbB

(57) **Zusammenfassung**

Die Erfindung betrifft eine Biegemaschine, insbesondere Abkantpresse, mit einer Oberwange (7) und einer Unterwange (9), wobei die Oberwange (7) in einer Arbeitsrichtung (z) der Biegemaschine (1) bewegbar ist, um ein Werkstück durch Biegen entlang einer Biegelinie umzuformen, die in einer Breitenrichtung (y) der Biegemaschine (1) verläuft, wobei die Biegemaschine (1) ein Sicherheitssystem (12) mit einem ersten Funktionselement (13a) und einem weiteren Funktionselement (13b) zur Überwachung eines Sicherheitsbereichs zwischen beiden Funktionselementen (13a, 13b) und zwischen Oberwange (7) und Unterwange (9) beinhaltet wobei das Sicherheitssystem (12) derart angeordnet sind, dass es der Bewegung der Oberwange (7) in der Arbeitsrichtung (z) folgt. Das erste Funktionselement (13a) und das weitere Funktionselement (13b) sind miteinander über ein flexibles Zugkraft-Übertragungsmittel (16) und eine Verstelleinrichtung (17) zur Positionsänderung der Funktionselemente (13a, 13b) mechanisch verbunden, wobei die Verstelleinrichtung (17) einen in Arbeitsrichtung beweglich geführten Kopplungsabschnitt (23) beinhaltet, der mit dem Zugkraft-Übertragungsmittel (16) gekoppelt ist, um eine Bewegung des Kopplungsabschnitts (23) zu einer Bewegung des flexiblen Zugkraft-Übertragungsmittels (16) umzusetzen, welche eine weg-identische Positionsänderung der Funktionselemente (13a, 13b) in der Arbeitsrichtung (z) relativ zur Oberwange (7) bewirkt.

## Beschreibung

Die Erfindung betrifft eine Biegemaschine, insbesondere Abkantpresse, mit einem Sicherheitssystem sowie ein entsprechendes Sicherheitssystem.

In Biegemaschinen wird eine Verformung eines Werkstücks durch eine vertikal bewegbare Oberwange erreicht, die auf das Werkstück drückt, das auf einer unterhalb der Oberwange befindlichen Unterwange aufliegt.

Aus dem Stand der Technik ist es bekannt, an einer Biegemaschine ein Sicherheitssystem aus einem Sender und Empfänger vorzusehen, um das unbeabsichtigte Eindringen von Objekten bzw. Körperteilen zwischen Oberwange und Unterwange zu detektieren. Der Sender und der Empfänger werden an entgegengesetzten Enden seitlich unter der Oberwange positioniert und folgen der Bewegung der Oberwange. Der Sender sendet dabei Strahlung, wie z.B. Licht, aus, das durch den Empfänger detektiert wird. Durch Objekte zwischen Sender und Empfänger wird weniger Strahlung durch den Empfänger erfasst. Als Konsequenz kann die Bewegung der Oberwange gestoppt werden.

Oftmals besteht die Notwendigkeit, für ein solches Sicherheitssystem die vertikale Höhe von Sender und Empfänger in der Biegemaschine anzupassen, z.B. wenn Werkzeuge in der Biegemaschine ausgetauscht werden und sich hierdurch die Höhe des Detektionsbereichs zwischen Sender und Empfänger verändert.

In der Druckschrift EP 3 372 319 A2 ist ein Sicherheitssystem für eine Biegemaschine beschrieben, in dem der Sender und der Empfänger separat mit einem jeweiligen biegeschlaffen Halteelement verbunden sind, das über eine Stellscheibe geführt ist. Über die Stellscheibe kann die Höhe des jeweiligen Senders und Empfängers angepasst werden. Dieses Sicherheitssystem hat den Nachteil, dass eine getrennte Mechanik für Sender und Empfänger zur deren Höhenverstellung benötigt wird.

Die Druckschrift CN 111558666 A offenbart ein Sicherheitssystem für eine Biegemaschine, in dem eine synchrone Höhenverstellung eines Senders und eines Empfängers über eine komplexe und sperrige Gestängeanordnung erreicht wird.

Aufgabe der Erfindung ist es, in einer Biegemaschine ein Sicherheitssystem vorzusehen, das über eine einfach aufgebaute und platzsparenden Verstelleinrichtung zur Höhenverstellung des Senders und Empfängers verfügt.

Diese Aufgabe wird durch die Biegemaschine gemäß Patentanspruch 1 bzw. das Sicherheitssystem gemäß Patentanspruch 14 gelöst. Weiterbildungen der Erfindung sind in den abhängigen Ansprüchen definiert.

Die erfindungsgemäße Biegemaschine, die insbesondere eine Abkantpresse ist, beinhaltet eine Oberwange und eine Unterwange, wobei die Oberwange in einer Arbeitsrichtung der Biegemaschine relativ zur Unterwange bewegbar ist, um ein Werkstück, insbesondere ein Blech, das über eine Vorderseite der Biegemaschine zwischen Oberwange und Unterwange eingeführt ist, durch Biegen entlang einer Biegelinie umzuformen, die in einer Breitenrichtung der Biegemaschine verläuft. Die Arbeitsrichtung entspricht vorzugsweise einer vertikalen Höhenrichtung der Biegemaschine.

Sofern im Folgenden Begriffe im Zusammenhang mit oben oder unten bzw. oberhalb oder unterhalb bzw. in Bezug auf eine (vertikale) Höhenrichtung verwendet werden, so beziehen sich diese Begriffe immer auf die vertikale Oben-Unten-Richtung in der Betriebsposition der Biegemaschine, d.h. der Position ihrer bestimmungsgemäßen Verwendung.

Die Biegemaschine umfasst ein Sicherheitssystem mit einem ersten Funktionselement und einem weiteren Funktionselement zur Überwachung eines Sicherheitsbereichs zwischen beiden Funktionselementen und zwischen Oberwange und Unterwange. Vorzugsweise handelt es sich bei dem ersten Funktionselement um einen Sender zum Aussenden von Strahlung und bei dem weiteren Funktionselement um einen Empfänger zum Empfang der Strahlung des Senders. Bei der Strahlung des Senders handelt es sich vorzugsweise um optische Strahlung im sichtbaren und gegebenenfalls auch nicht-sichtbaren Wellenlängenbereich. Gegebenenfalls kann die Strahlung auch Laserstrahlung sein. Das Sicherheitssystem ist derart angeordnet, dass es der Bewegung der Oberwange in der Arbeitsrichtung folgt. Neben optisch arbeitenden Funktionselementen sind jedoch auch mittels anderer Prinzipien arbeitende denkbar, wie z.B. Schall- oder Ultraschallsensoren, Radarsensoren, kapazitive Sensoren etc..

In der erfindungsgemäßen Biegemaschine sind das erste Funktionselement und das weitere Funktionselement miteinander über ein flexibles Zugkraft-Übertragungsmittel und eine Verstelleinrichtung zur Positionsänderung der Funktionselemente mechanisch verbunden. Unter einem flexiblen Zugkraft-Übertragungsmittel ist dabei ein Übertragungsmittel zu verstehen, das ausschließlich zur Übertragung von Zugkraft dient und ohne darauf wirkende Zugkraft verformbar bzw. biegeschlaff ist.

Die Verstelleinrichtung beinhaltet einen in Arbeitsrichtung beweglich geführten Kopplungsabschnitt, der mit dem flexiblen Zugkraft-Übertragungsmittel (mechanisch) gekoppelt ist, um eine Bewegung des Kopplungsabschnitts zu einer Bewegung des flexiblen Zugkraft-Übertragungsmittels umzusetzen, welche eine weg-identische Positionsänderung der Funktionselemente in der Arbeitsrichtung relativ zur Oberwange bewirkt. Es ist somit ein gemeinsamer Kopplungsabschnitt für das erste Funktionselement und das weitere Funktionselement vorgesehen.

Die erfindungsgemäße Biegemaschine weist den Vorteil auf, dass einfach und platzsparend über einen gemeinsamen Kopplungsabschnitt für das erste Funktionselement und das weitere Funktionselement in Kombination mit einem flexiblen Zugkraft-Übertragungsmittel eine synchrone Positionsänderung des der beiden Funktionselemente erreicht werden kann.

In einer bevorzugten Variante der erfindungsgemäßen Biegemaschine sind der Kopplungsabschnitt und das flexible Zugkraft-Übertragungsmittel derart angeordnet, dass die Positionsänderung des ersten Funktionselements und des weiteren Funktionselements in der Arbeitsrichtung relativ zur Oberwange eine lineare Verschiebung des ersten Funktionselements und des weiteren Funktionselements entlang der Arbeitsrichtung ist. Hierdurch wird eine platzsparende Bewegung des Senders und des Empfängers für deren Positionsänderung gewährleistet.

In einer weiteren bevorzugten Ausgestaltung umfasst das flexible Zugkraft-Übertragungsmittel einen oder mehrere Abschnitte, wobei ein erster Abschnitt den Kopplungsabschnitt mit dem ersten Funktionselement verbindet und ein weiterer Abschnitt den Kopplungsabschnitt mit dem weiteren Funktionselement verbindet. Hierdurch wird eine besonders einfache Konfiguration des Zugkraft-Übertragungsmittels geschaffen. Die Abschnitte können beispielsweise als Seile (z.B. Drahtseile) ausgestaltet sein.

In einer weiteren bevorzugten Ausführungsform ist das flexible Zugkraft-Übertragungsmittel an der Rückseite der Oberwange geführt, wobei die Rückseite von der Vorderseite der Biegemaschine weg weist. Auf diese Weise wird sichergestellt, dass das Zugkraft-Übertragungsmittel nicht auf der Bedienerseite der Biegemaschine angeordnet ist, wodurch unerwünschte Störkonturen und Quetschstellen auf der Bedienerseite vermieden werden.

In einer bevorzugten Variante der soeben beschriebenen Ausführungsform sind zur Führung des flexiblen Zugkraft-Übertragungsmittels ein oder mehrere Umlenkmittel vorgesehen, die auf der Rückseite der Oberwange angeordnet sind. Vorzugsweise sind diese Umlenkmittel als Umlenkrollen ausgestaltet. Mit dieser Variante kann eine flexible Anordnung des Zugkraft-Übertragungsmittels auf der Rückseite der Oberwange erreicht werden.

In einer weiteren bevorzugten Ausführungsform ist die Verstelleinrichtung an der Oberwange angeordnet. Beispielsweise kann die Verstelleinrichtung in der Oberwange integriert sein. Vorzugsweise ist dabei der Kopplungsabschnitt an der Rückseite der Oberwange angeordnet. Hierdurch wird eine kompakte Anordnung der Verstelleinrichtung in der Biegemaschine erreicht. Nichtsdestotrotz ist es gegebenenfalls auch möglich, die Verstelleinrichtung seitlich versetzt in Breitenrichtung neben der Oberwange anzuordnen. In einer weiteren Ausgestaltung ist die Verstelleinrichtung durch eine Abdeckung abgedeckt, so dass diese im Betrieb der Biegemaschine geeignet geschützt ist.

In einer besonders bevorzugten Ausführungsform ist der Kopplungsabschnitt linear und vorzugsweise in Arbeitsrichtung der Biegemaschine bewegbar, wobei die lineare Bewegung des Kopplungsabschnitts ein Ende des Zugkraft-Übertragungsmittels, das mit dem ersten Funktionselement verbunden ist, um die gleiche Distanz in der Arbeitsrichtung versetzt wie ein weiteres Ende des Zugkraft-Übertragungsmittels, das mit dem weiteren Funktionselement verbunden ist. Mit dieser Ausführungsform wird auf einfache Weise über eine geradlinige Bewegung des Kopplungsabschnitts die Positionsänderung der Funktionselemente bewirkt.

In einer besonders bevorzugten Ausführungsform ist die Verstelleinrichtung eine manuelle Verstelleinrichtung, durch welche über eine mechanische Kraftausübung eines Bedieners die Bewegung des Kopplungsabschnitts bewirkt wird. In einer bevorzugten Variante umfasst die manuelle Verstelleinrichtung ein zugfestes Stellelement, wie z.B. ein Band oder Seil, an dem eine Handhabe (z.B. ein Griff) vorgesehen ist. Dieses zugfeste Stellelement ist auf der Rückseite der Oberwange, die von der Vorderseite der Biegemaschine weg weist, mit dem dort befindlichen Kopplungsabschnitt verbunden. Das zugfeste Stellelement erstreckt sich von der Rückseite der Oberwange durch die Oberwange hindurch und anschließend entlang der zur Rückseite entgegengesetzten Vorderseite der Oberwange bis zu der Handhabe, wobei das zugfeste Stellelement entlang der Vorderseite vorzugsweise nach unten bis zu der Handhabe verläuft. Der Kopplungsabschnitt ist durch Erhöhung und Verminderung der Zugkraft, die der Bediener über die Handhabe auf das zugfeste Stellelement ausübt, bewegbar. Vorzugsweise ist die Handhabe magnetisch, bzw. weist ein magnetisches Element auf, so dass die Handhabe durch Magnetkraft an der Vorderseite der Oberwange anhaftet. Mit der soeben beschriebenen Ausführungsform wird eine sehr platzsparende und komfortable manuelle Verstellung der Position der Funktionselemente erreicht. Ferner kann der Bediener durch diese Ausführungsform im Maschinenbetrieb nicht gefährdet werden. In einem möglichen Kollisionsfall löst sich die Handhabe von der Oberwange und eliminiert die Quetschgefahr.

In einer weiteren bevorzugten Ausführungsform beinhaltet die manuelle Verstelleinrichtung ein Arretierungsmittel, mit dem der Bediener den Kopplungsabschnitt in mehreren unterschiedlichen Positionen arretieren kann. Das Arretierungsmittel kann dabei aus einer arretierten Position durch den Bediener gelöst werden und anschließend nach Bewegung des Kopplungsabschnitts in einer neuen Position durch den Bediener arretiert werden. Je nach Ausgestaltung kann die Arretierung rasterlos, z.B. über einen Klemmmechanismus, realisiert sein oder sie kann gerastert ausgestaltet sein, d.h. es existiert eine fest vorgegebene Anzahl von Arretierungspositionen.

In einer bevorzugten Variante umfasst das Arretierungsmittel ein vorzugsweise über die Vorderseite der Oberwange betätigbares Positionierelement, wie z.B. einen Bolzen, zum Verrasten in verschiedenen definierten Rastpositionen des Kopplungsabschnitts. Das Positionierelement ist über ein Rückstellelement in eine Arretierungslage vorgespannt. Falls das Positionierelement über die Vorderseite der Oberwange betätigbar ist, steht es vorzugsweise nicht über die Vorderseite der Oberwange vor, wodurch Störkonturen und Quetschstellen an der Vorderseite der Oberwange vermieden werden.

Anstatt einer manuellen Verstelleinrichtung kann auch eine automatische Verstelleinrichtung vorgesehen sein, die mittels einer Aktorik, z.B. hydraulisch und/oder elektromechanisch und/oder pneumatisch, betätigbar ist. Die Aktorik ist vorzugsweise über Bedienaktionen eines Bedieners steuerbar. Mit dieser Ausführungsform wird die Verstellung der Position der Funktionselemente erleichtert.

In einer weiteren bevorzugten Ausführungsform ist ein Anzeigemittel zur Visualisierung der Position (vorzugsweise der Höhenposition) des ersten Funktionselements und des weiteren Funktionselements in der Arbeitsrichtung für einen Bediener vorgesehen. In einer einfachen Realisierung ist das Anzeigemittel eine Skala, wobei vorzugsweise durch ein Bedienelement, wie zum Beispiel die obige Handhabe des zugfesten Stellelements, die Position der Funktionselemente in der Arbeitsrichtung an der Skala angezeigt wird. Nichtsdestotrotz kann das Anzeigemittel auch eine oder mehrere Leuchteinheiten bzw. ein oder mehrere Displays umfassen.

Neben der oben beschriebenen Biegemaschine betrifft die Erfindung ein Sicherheitssystem für eine Biegemaschine. Die im Folgenden beschriebenen Wechselwirkungen zwischen dem Sicherheitssystem und der Biegemaschine sind derart zu verstehen, dass diese Wechselwirkungen bei Einbau des Sicherheitssystems in der Biegemaschine, d.h. bei bestimmungsgemäßer Verwendung bzw. bestimmungsgemäßem Betrieb des Sicherheitssystems in der Biegemaschine, auftreten. Das Sicherheitssystem bzw. dessen Komponenten sind somit dazu eingerichtet, die entsprechenden Wechselwirkungen im eingebauten Zustand des Sicherheitssystems in der Biegemaschine hervorzurufen.

Die Biegemaschine, für die das Sicherheitssystem vorgesehen ist, umfasst eine Oberwange und eine Unterwange, wobei die Oberwange in einer Arbeitsrichtung der Biegemaschine relativ zur Unterwange bewegbar ist, um ein Werkstück, das über eine Vorderseite der Biegemaschine zwischen Oberwange und Unterwange eingeführt ist, durch Biegen entlang einer Biegelinie umzuformen, die in einer Breitenrichtung der Biegemaschine verläuft.

Das Sicherheitssystem umfasst ein erstes Funktionselement und ein weiteres Funktionselement zur Überwachung eines Sicherheitsbereichs zwischen beiden Funktionselementen und zwischen Oberwange und Unterwange der Biegemaschine. Das Sicherheitssystem ist bei Einbau in der Biegemaschine derart angeordnet, dass es der Bewegung der Oberwange in der Arbeitsrichtung folgt.

In dem erfindungsgemäßen Sicherheitssystem sind das erste Funktionselement und das weitere Funktionselement miteinander über ein flexibles Zugkraft-Übertragungsmittel und eine Verstelleinrichtung zur Positionsänderung der Funktionselemente mechanisch verbunden, wobei die Verstelleinrichtung einen in Arbeitsrichtung beweglich geführten Kopplungsabschnitt umfasst, der mit dem flexiblen Zugkraft-Übertragungsmittel (mechanisch) gekoppelt ist, um eine Bewegung des Kopplungsabschnitts zu einer Bewegung des flexiblen Zugkraft-Übertragungsmittels umzusetzen, welche eine weg-identische Positionsänderung der Funktionselemente in der Arbeitsrichtung relativ zur Oberwange bewirkt. Das erfindungsgemäße Sicherheitssystem ist somit zur Verwendung in der erfindungsgemäßen Biegemaschine eingerichtet.

Vorzugsweise ist das Sicherheitssystem zur Verwendung in einer oder mehreren bevorzugten Ausführungsformen der erfindungsgemäßen Biegemaschine eingerichtet. Mit anderen Worten kann das Sicherheitssystem die obigen Merkmale enthalten, die im Zusammenhang mit bevorzugten Ausführungsformen der erfindungsgemäßen Biegemaschine beschrieben wurden.

Ein Ausführungsbeispiel der Erfindung wird nachfolgend anhand der beigefügten Figuren detailliert beschrieben.

Es zeigen:
- Fig. 1: eine perspektivische Darstellung einer Ausführungsform einer erfindungsgemäßen Biegemaschine in der Form einer Abkantpresse;
- Fig. 2: eine Draufsicht von vorne auf die Biegemaschine der Fig. 1;
- Fig. 3: eine perspektivische Ansicht von hinten auf die Oberwange der Biegemaschine der Fig. 1 mit dem dort verbauten Sicherheitssystem;
- Fig. 4: eine ausschnittsweise Draufsicht, welche die Verstelleinrichtung aus Fig. 3 im Detail zeigt; und
- Fig. 5: eine perspektivische Detailansicht unter Weglassung der Oberwange, die den Mechanismus zur Arretierung des Kopplungsabschnitts verdeutlicht.

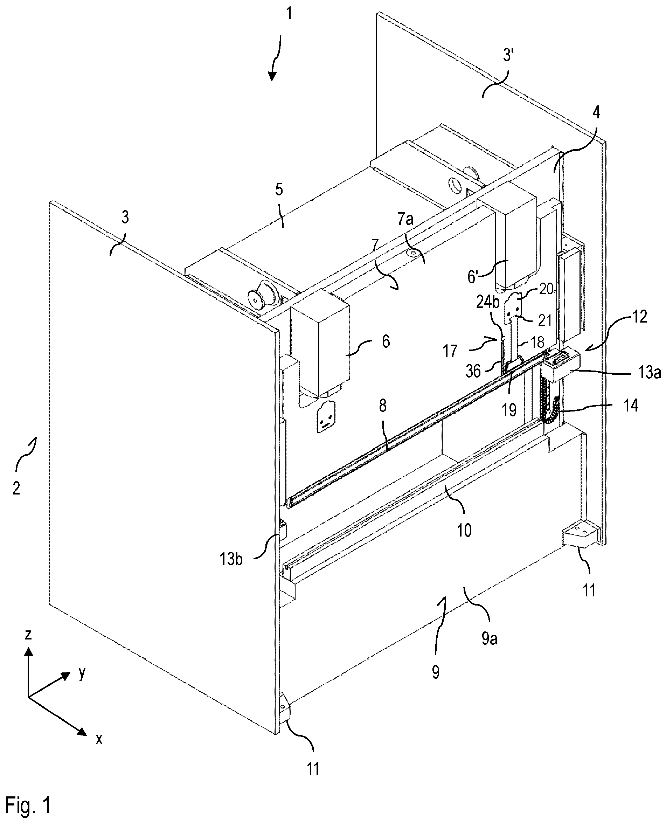

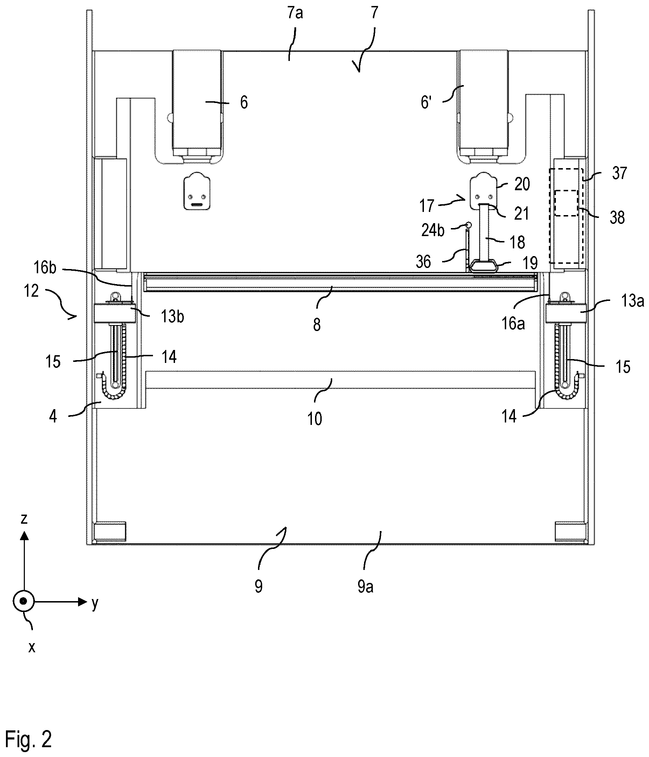

Nachfolgend wird eine Ausführungsform der Erfindung anhand einer Biegemaschine in der Form einer Abkantpresse beschrieben. Diese Abkantpresse ist in perspektivischer Darstellung in Fig. 1 gezeigt und dort mit Bezugszeichen 1 bezeichnet. In Fig. 1 und auch in den weiteren Figuren 2 bis 5 ist ein räumliches Koordinatensystem zur Beschreibung der Richtungen der Biegemaschine wiedergegeben. Die x-Richtung entspricht dabei der Tiefenrichtung der Biegemaschine und ein zu biegendes Werkstück wird in Richtung entgegengesetzt zur x-Richtung in die Biegemaschine über deren Vorderseite eingeschoben. Demgegenüber ist die y-Richtung die Breitenrichtung der Biegemaschine. Beide Richtungen liegen in einer horizontalen Ebene. Die z-Richtung ist die vertikale Richtung und entspricht der Höhenrichtung der Biegemaschine.

Die Biegemaschine 1 umfasst einen Rahmen 2, der unter anderem zwei Seitenständer 3, 3' sowie eine Rahmenplatte 4 umfasst. An der Vorderseite der Biegemaschine sind eine Oberwange 7 und eine Unterwange 9 vorgesehen. Die Vorderseite der Oberwange 7 ist mit Bezugszeichen 7a und die Vorderseite der Unterwange 9 mit Bezugszeichen 9a bezeichnet. Auf der Oberkante der Unterwange 9 befindet sich ein Werkzeugtisch 10, auf dem im Betrieb der Biegemaschine Unterwerkzeuge befestigt sind. Demgegenüber umfasst die Oberwange 7 eine Werkzeugaufnahme 8 zur Befestigung korrespondierender Oberwerkzeuge. Im Betrieb der Biegemaschine wird ein Blech in den Raum zwischen Oberwange 7 und Unterwange 9 eingeführt und die Oberwange 7 wird anschließend nach unten bewegt, so dass die Oberwerkzeuge in die Unterwerkzeuge eindrücken und hierdurch das Blech verformen. Um einen stabilen Stand der Biegemaschine bei einem Biegevorgang zu gewährleisten, ist diese in ihren Ecken über entsprechende Verankerungsmittel 11 am Boden verankert.

Zur Bewegung der Oberwange 7 wird eine hydraulische Aktorik verwendet, die größtenteils auf der Oberseite einer Versteifungsplatte 5 angeordnet ist, die sich zwischen den Seitenständer 3 und 3' erstreckt. In der Darstellung der Fig. 1 sind von der Aktorik lediglich die beiden Hydraulikzylinder 6 und 6' ersichtlich, die an der Rahmenplatte 4 angebracht sind und in Aussparungen der Oberwange 7 positioniert sind. Entsprechende Zylinderstangen sind in diesem Bereich mit der Oberwange verbunden und können ein Verfahren der Oberwange in der vertikalen Höhenrichtung z bewirken.

Um den Raum zwischen Oberwange und Unterwange zu überwachen und das unbeabsichtigte Eindringen von Objekten in diesen Bereich zu detektieren, ist an der Biegemaschine ein Sicherheitssystem 12 vorgesehen. Dieses Sicherheitssystem 12 umfasst ein erstes Funktionselement, das in der hier beschriebenen Ausführungsform als ein Sender 13a zum Aussenden von Licht, zum Beispiel im nicht-sichtbaren Infrarotbereich, ausgebildet ist, sowie ein weiteres Funktionselement, das in der hier beschriebenen Ausführungsform als ein Empfänger 13b ausgebildet ist, der das Licht des Senders detektiert. Das erste Funktionselement 13a bzw. der Sender ist am rechten Ende der Oberwange 7 angeordnet, wohingegen das weitere Funktionselement 13b bzw. der Empfänger am entgegengesetzten linken Ende der Oberwange 7 positioniert ist. Alternativ kann auch das weitere Funktionselement 13b am rechten Ende der Oberwange 7 und das erste Funktionselement 13a am linken Ende der Oberwange angeordnet sein. Tritt unbeabsichtigt ein Objekt bzw. ein menschliches Körperteil zwischen Oberwange 7 und Unterwange 9 ein, wird hierdurch die am Empfänger 13b ankommende Lichtstrahlung blockiert oder vermindert, woraufhin die Bewegung der Oberwange 7 sofort gestoppt. Hierdurch werden Verletzungen des menschlichen Bedieners, zum Beispiel bei Eindringen seiner Hand zwischen Oberwange und Unterwange, vermieden.

Das erste Funktionselement 13a und das weitere Funktionselement 13b sind mit elektrischen Kabeln verbunden, über welche sie mittels einer (nicht gezeigten) Steuereinrichtung angesteuert werden und ferner auch mit Energie versorgt werden. Die Kabel werden in entsprechenden Energieketten 14 geführt, die sich vom Sender bzw. Empfänger nach unten erstrecken.

Der Sender und der Empfänger folgen der vertikalen Bewegung der Oberwange 7, wobei ihre relative Höhenposition in Bezug auf die Oberwange mit einer Verstelleinrichtung 17 eingestellt werden kann, die weiter unten näher beschrieben wird. Von dieser Verstelleinrichtung sind in Fig. 1 ein zugfestes Stellelement 18 in der Form eines Bands mit einer daran befindlichen Handhabe 19 in der Form eines Griffs ersichtlich. Das zugfeste Stellelement erstreckt sich in einen Durchgang 21 eines Abdeckelements 20 in der Form einer Abdeckplatte an der Vorderseite 7a der Oberwange 7. Um eine Schlingerbewegung der Handhabe 19 bei Bewegung der Oberwange zu verhindern, ist diese vorzugsweise magnetisch ausgestaltet, so dass sie über Magnetkraft an der Vorderseite 7a der Oberwange 7 anhaftet.

Gemäß Fig. 1 ist auf der Vorderseite 7a der Oberwange 7 ferner ein Anzeigemittel 36 in der Form einer Skala vorgesehen, über welche die Höhenposition des Senders und des Empfängers als die Position auf der Skala abgelesen werden kann, in deren Höhe sich eine entsprechende Markierung an der Handhabe 19 befindet. Über dem Anzeigemittel 36 befindet sich ein mit der Vorderseite 7a der Oberwange 7 bündig abschließendes Bedienelement 24b in der Form eines Bedienknopfs, der Bestandteil des weiter unten beschriebenen Positionierelements 24 ist, das in der hier beschriebenen Ausführungsform als Bolzen ausgestaltet ist, über den eine Arretierung der Verstelleinrichtung 17 bewirkt wird.

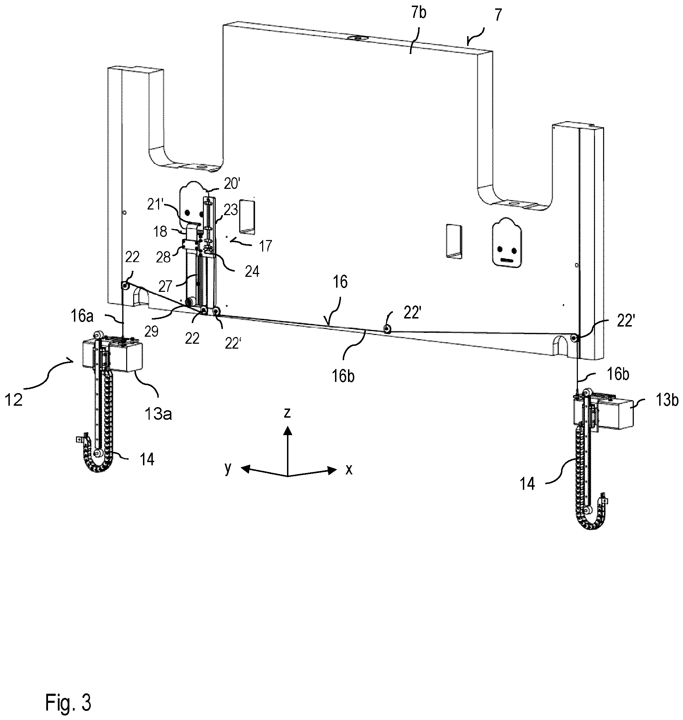

Fig. 2 zeigt eine Draufsicht von vorne auf die Biegemaschine der Fig. 1, aus der die Befestigung des Senders und des Empfängers besser ersichtlich ist. Der Sender, bzw. das erste Funktionselement13a und das weitere Funktionselement 13b bzw. der Empfänger sind über ein flexibles Zugkraft-Übertragungsmittel 16 (siehe Fig. 3) miteinander verbunden. Das Zugkraft-Übertragungsmittel 16 besteht aus einem ersten Abschnitt 16a, der in der hier beschriebenen Ausführungsform als Seil ausgestaltet ist, sowie einem weiteren Abschnitt 16b, der in der hier beschriebenen Ausführungsform ebenfalls als Seil ausgestaltet ist. Die Seile sind beispielsweise dünne Drahtseile mit einem Durchmesser zwischen 0,5 und 5 mm. Der genaue Aufbau des Zugkraft-Übertragungsmittels 16 wird weiter unten anhand von Fig. 3 näher beschrieben. Das Seil, welches den ersten Abschnitt16a bildet, ist mit dem Sender verbunden, wohingegen das Seil, welches den weiteren Abschnitt 16b bildet, mit dem Empfänger gekoppelt ist. Mit diesen Seilen werden Sender und Empfänger in der aktuellen Höhenposition gehalten. Der Sender und der Empfänger werden ferner über jeweilige vertikal verlaufende Führungen 15 an der Rahmenplatte 4 geführt.

In der hier beschriebenen Ausführungsform ist die Verstelleinrichtung 17 in der Oberwange 7 integriert. In einer abgewandelten Ausführungsform ist es auch möglich, dass die Verstelleinrichtung 17 in Breitenrichtung y seitlich versetzt neben der Oberwange an ihrem rechten oder linken Rand angeordnet ist und dort an der Rahmenplatte 4 befestigt ist. Beispielsweise kann sich die Verstelleinrichtung neben dem rechten Rand der Oberwange 7 befinden und dort gegebenenfalls durch eine Abdeckung 37 abgedeckt sein. Diese Abdeckung ist in Fig. 2 nur schematisch durch ein gestricheltes Rechteck angedeutet.

In der hier beschriebenen Ausführungsform wird eine manuell durch einen Bediener betätigbare Verstelleinrichtung zur Anpassung der Höhenposition von Sender und Empfänger verwendet. Nichtsdestotrotz kann die Verstelleinrichtung gegebenenfalls auch eine Aktorik zu deren Betätigung umfassen. Beispielhaft ist eine entsprechende Aktorik in Fig. 2 schematisch durch ein gestricheltes Quadrat neben dem rechten Rand der Oberwange 7 angedeutet und mit Bezugszeichen 38 bezeichnet.

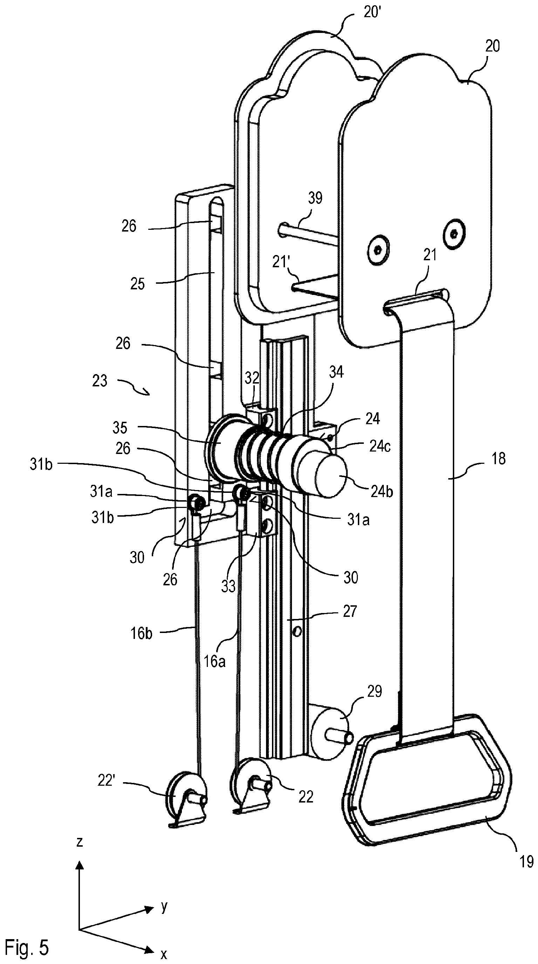

Fig. 3 zeigt in perspektivischer Ansicht die Rückseite 7b der Oberwange 7 mit der darin integrierten Verstelleinrichtung 17. Aus Fig. 3 wird insbesondere die Führung der beiden Seile 16a und 16b des Zugkraft-Übertragungsmittels 16 ersichtlich. Das mit dem Sender 13a verbundene Seil 16a, das kürzer als das Seil 16b ist, verläuft über zwei Umlenkmittel 22 in der Form von Umlenkrollen zu einem vertikal verschiebbaren Kopplungsabschnitt 23, der Bestandteil der Verstelleinrichtung 17 ist und in vertikaler Richtung in einer Führung 27 (siehe Fig. 5) geführt ist. Ähnlich wie der erste Abschnitt / das Seil 16a verläuft der weitere Abschnitt / das Seil 16b über Umlenkmittel bzw. Umlenkrollen 22', wobei aufgrund der größeren Seillänge drei Umlenkmittel vorgesehen sind.

Die beiden oberen Enden der Seile sind auf der Rückseite des Kopplungsabschnitts 23 befestigt. Dies ist aus Fig. 5 ersichtlich. Dort erkennt man, dass das obere Ende des Seils 16b über eine Schnittstelle 30 mit dem Kopplungsabschnitt 23 verbunden ist. Die Schnittstelle umfasst ein Befestigungsmittel 31a in der Form einer Schraube, welche ein Gegenbefestigungsmittel 31b in der Form einer am oberen Ende des weiteren Abschnitts / Seils 16b angebrachten Öse am Kopplungsabschnitt 23 befestigt. In gleicher Weise ist das obere Ende des ersten Abschnitts / Seils 16a über eine entsprechende Schnittstelle 30 aus Befestigungsmittel 31a und Gegenbefestigungsmittel 31b am Kopplungsabschnitt 23 befestigt.

Durch die Verbindung der beiden Seile mit dem gemeinsamen Kopplungsabschnitt 23 wird auf einfache Weise eine gleichzeitige vertikale Bewegung des Senders und des Empfängers mittels einer vertikalen Bewegung des Kopplungsabschnitts 23 erreicht. Um einem Bediener die Bewegung des Kopplungsabschnitts 23 zu ermöglichen, ist das zugfeste Stellelement 18 über eine Schnittstelle, die in der hier beschriebenen Ausführungsform als Klemmeinrichtung 28 ausgestaltet ist, mit dem Kopplungsabschnitt 23 verbunden. Die Klemmeinrichtung 28 besteht dabei aus zwei verschraubten Klemmplatten, welche das untere Ende des zugfesten Stellelements 18 durch Klemmung halten und am Kopplungsabschnitt 23 angeschraubt sind. Unter der Klemmeinrichtung 28 befindet sich ferner ein Wegbegrenzungselement 29, das als Anschlag ausgebildet ist und durch das die Bewegung der Klemmeinrichtung 28 und des damit verbundenen Kopplungsabschnitts 23 nach unten begrenzt wird.

Gemäß Fig. 3 wird das zugfeste Stellelement 18 oberhalb der Klemmeinrichtung 28 durch einen Durchgang 21' eines Abdeckelements 20' in der Form einer Abdeckplatte an der Rückseite 7b der Oberwange 7 geführt. Der Durchgang 21' korrespondiert mit dem entsprechenden Durchgang 21 auf der Vorderseite 7a der Oberwange 7. Zwischen diesen Durchgängen ist eine entsprechende Öffnung in der Oberwange ausgebildet, durch welche das zugfeste Stellelement 18 von der Rückseite zur Vorderseite der Oberwange 7 verläuft.

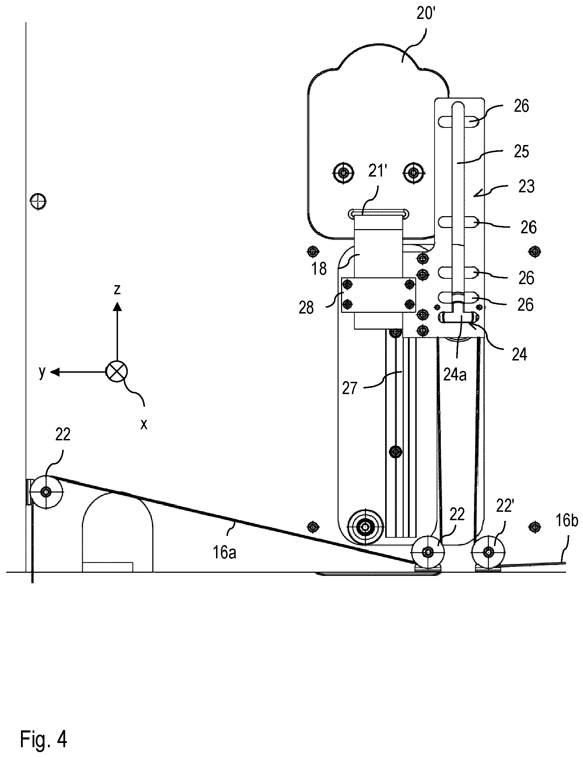

Der Kopplungsabschnitt 23 kann in verschiedenen vertikalen Positionen arretiert werden. Hierzu wird das Positionierelement / der Bolzen 24 verwendet, der mit einer Rastung wechselwirkt, welche in der hier beschriebenen Ausführungsform durch horizontal verlaufende Langlöcher 26 des Kopplungsabschnitts 23 gebildet ist. Das Positionierelement kann zur Arretierung in die horizontal verlaufenden Langlöcher positioniert werden, wie im Folgenden anhand von Fig. 4 näher erläutert wird. Diese Figur zeigt eine detaillierte Draufsicht auf die Verstelleinrichtung der Fig. 3. In Fig. 4 erkennt man insbesondere das Positionierelement 24 mit seinem an der Rückseite 7b der Oberwange 7 liegenden Ende. Dieses Ende ist als T-förmiger Abschnitt 24a mit einem horizontalen und einem vertikalen Schenkel ausgebildet. Der horizontale Schenkel des T-förmigen Abschnitts 24a kann dabei in entsprechende Langlöcher 26 des Kopplungsabschnitts 23 aufgenommen werden, wodurch eine Arretierung des Kopplungsabschnitts bewirkt wird und hierdurch eine Höhenposition des Senders und Empfängers eingestellt wird. Die Langlöcher erstrecken sich senkrecht zu einer länglichen, vertikal verlaufenden Führungsöffnung 25, in welcher das Positionierelement 24 bzw. der vertikale Schenkel des T-förmigen Abschnitts 24a in vertikaler Richtung im Kopplungsabschnitt 23 geführt ist.

In der in Fig. 4 gezeigten Position des Kopplungsabschnitts 23 befindet sich der horizontale Schenkel des T-förmigen Abschnitts 24a in dem untersten der insgesamt fünf Langlöcher 26, was der höchsten vertikalen Position des Senders und des Empfängers entspricht. Durch Positionierung des horizontalen Schenkels des T-förmigen Abschnitts in einem anderen Langloch 26 wird die vertikale Position des Senders und des Empfängers erniedrigt.

Die Arretierung und das Lösen der Arretierung des Kopplungsabschnitts 23 mittels des Positionierelements 24 werden nachfolgend anhand von Fig. 5 näher erläutert. Diese Figur zeigt in perspektivischer Detailansicht die Verstelleinrichtung 17 mit Blickrichtung auf die Vorderseite der Oberwange, wobei die Oberwange zur Darstellung der darin verbauten Komponenten weggelassen wurde. In Fig. 5 befindet sich der horizontale Schenkel des T-förmigen Abschnitts 24a in dem drittuntersten der fünf Langlöcher 26, wohingegen er in Fig. 4 in dem untersten Langloch aufgenommen ist. Aus Fig. 5 wird ersichtlich, dass sich das zugfeste Stellelement 18 durch die Oberwange zwischen den beiden Durchgängen 21 und 21' der Abdeckelemente 20, 20' erstreckt. Hierzu ist in der Oberwange eine mit den Durchgängen 21, 21' korrespondierende Öffnung vorgesehen. Darüber hinaus sind die beiden Abdeckelemente 20 und 20' über entsprechende Löcher in der Oberwange durch Verbindungsmittel miteinander verbunden. Die Verbindungsmittel sind in der hier beschriebenen Ausführungsform Schraubbolzen, über welche die Abdeckelemente miteinander verschraubt sind, wobei aus Fig. 5 einer dieser Schraubbolzen ersichtlich ist und mit Bezugszeichen 39 bezeichnet ist.

Aus Fig. 5 erkennt man ferner, dass an der Rückseite des Kopplungsabschnitts 23 zwei Schlittenelemente 32 und 33 vorgesehen sind, die entlang der Führung 27 geführt sind und hierdurch das vertikale Gleiten des Kopplungsabschnitts 23 entlang der Führung 27 ermöglichen.

Gemäß Fig. 5 weist das zur Arretierung genutzte Positionierelement 24 das bereits oben erwähnte Bedienelement 24b an der Vorderseite der Oberwange auf. Das Positionierelement 24 erstreckt sich durch eine entsprechende Öffnung in der Oberwange und ist durch ein elastisch ausgebildetes Rückstellelement 34 in der Form einer Schraubenfeder in Richtung zur Vorderseite der Oberwange vorgespannt. Das Rückstellelement 34 befindet sich zwischen einem verdickten zylindrischen Abschnitt 24c des Positionierelements 24 und einem Führungslager 35 in der Form einer Hülse, in welcher das Positionierelement geführt ist und die benachbart zum Kopplungsabschnitt 23 in der Oberwange angeordnet ist.

Indem ein Bediener auf das Bedienelement 24b des Positionierelements 24 drückt, wird das Positionierelement 24 gegen die elastische Kraft des Rückstellelements 34 in die Oberwange 7 hineingedrückt. Als Folge bewegt sich der horizontale Schenkel des T-förmigen Abschnitts 24a aus dem entsprechenden Langloch 26 heraus. Die Dicke des horizontalen Schenkels ist dabei geringer als die Dicke des vertikalen Schenkels des T-förmigen Abschnitts 24a. Sobald sich der horizontale Schenkel außerhalb des Langlochs 26 befindet, wird die Bewegung des Kopplungsabschnitts 23 freigegeben. Die Bewegung des Kopplungsabschnitts kann dabei durch den Bediener durch Ziehen am zugfesten Stellelement 18 bzw. Lösen der Zugkraft auf das zugfeste Stellelement 18 über die Handhabe 19 gesteuert werden.

Im Folgenden wird die Bedienaktion des Bedieners zur gleichzeitigen Höhenverstellung des ersten Funktionselements / Senders 13a und des weiteren Funktionselements / Empfängers 13b erläutert. Wenn der Bediener feststellt, dass z.B. aufgrund des Einbaus neuer Ober- bzw. Unterwerkzeuge der Sender und Empfänger in einer neuen Höhenposition anzuordnen sind, greift er das zugfeste Stellelement 18 über die Handhabe 19 und drückt gleichzeitig das Bedienelement 24b des Positionierelements 24, wodurch die Bewegung des Kopplungsabschnitts 23 freigegeben wird. Zunächst hält der Bediener den Kopplungsabschnitt 23 durch Ziehen am zugfesten Stellelement 18 in der aktuellen Höhenposition.

Zum Absenken des Senders und Empfängers löst der Bediener durch Verminderung seines Zugs am zugfesten Stellelement 18 die vertikale Bewegung des Kopplungsabschnitts nach unten aus, bis sich dieser in der gewünschten vertikalen Position befindet, die mit einer entsprechenden gewünschten Höhenposition des der Funktionselemente 13a und 13b korreliert. Analog kann der Bediener ein Anheben des Senders und Empfängers durch Zug am zugfesten Stellelement 18 und einer damit verbundenen vertikalen Bewegung des Kopplungsabschnitts 23 nach oben auslösen, sofern sich der horizontale Schenkel des T-förmigen Abschnitts 24a nicht im untersten Langloch befindet.

Sobald die gewünschte Höhenposition erreicht ist, wird dies dem Bediener über die Korrelation der Markierung an der Handhabe 19 mit der entsprechenden, am Anzeigemittel 36 aufgebrachten Höhe angezeigt. Der horizontale Schenkel des T-förmigen Abschnitts 24a befindet sich dann in der Höhe eines anderen Langlochs. Anschließend lässt der Bediener das Bedienelement 24b los. Daraufhin gleitet der horizontale Schenkel des T-förmigen Abschnitts 24a in das neue Langloch und bewirkt die Arretierung des Kopplungsabschnitts 23.

Die im Vorangegangenen beschriebene Ausführungsform der Erfindung weist eine Reihe von Vorteilen auf. Insbesondere wird auf einfache Weise durch einen bewegbaren Kopplungsabschnitt, der über ein flexibles Zugkraft-Übertragungsmittel sowohl mit dem Sender als auch dem Empfänger eines Sicherheitssystems verbunden ist, die gleichzeitige Höhenverstellung des Senders und Empfängers gewährleistet. Durch eine entsprechende Ausgestaltung bzw. Anordnung einer Verstelleinrichtung, zum Beispiel in der Form eines Kopplungsabschnitts auf der Rückseite der Oberwange in Kombination mit einem zugfesten Stellelement an der Vorderseite der Oberwange und einem bündig mit der Vorderseite abschließenden Bedienelement, werden Störkonturen bzw. Quetschstellen an der Vorderseite der Oberwange vermieden.

### B ezugszei chenli ste

- 1: Biegemaschine
- 2: Rahmen
- 3,3': Seitenständer
- 4: Rahmenplatte
- 5: Versteifungsplatte
- 6, 6': Hydraulikzylinder
- 7: Oberwange
- 7a: Vorderseite der Oberwange
- 8: Werkzeugaufnahme
- 9: Unterwange
- 9a: Vorderseite der Unterwange
- 10: Werkzeughalter
- 11: Verankerungsmittel
- 12: Sicherheitssystem
- 13a: erstes Funktionselement (z. B. Sender)
- 13b: weiteres Funktionselement (z.B. Empfänger)
- 14: Energieketten
- 15: Führungen
- 16: Zugkraft-Übertragungsmittel
- 16a: erster Abschnitt (von 16) (z.B. Seil)
- 16b: weiterer Abschnitt (von 16) (z.B. Seil)
- 17: Verstelleinrichtung
- 18: zugfestes Stellelement
- 19: Handhabe
- 20, 20': Abdeckelement
- 21, 21': Durchgang
- 22, 22': Umlenkmittel
- 23: Kopplungsabschnitt von 17 (als Kulisse ausgebildet)
- 24: Positionierelement (für 17) (z.B. Bolzen)
- 24a: T-förmiger Abschnitt des Positionierelements
- 24b: Bedienelement an 24
- 24c: verdickter zylindrischen Abschnitt an 24b
- 25: längliche Führungsöffnung an 23
- 26: Rastung an 23 (z.B. horizontale Langlöcher)
- 27: Führung
- 28: Schnittstelle zwischen Verstelleinrichtung und Positionierelement (als Klemmeinrichtung ausgebildet)
- 29: Wegbegrenzungselement für 23 (als Anschlag ausgebildet)
- 30: Schnittstellen von 16 (16a und 16b an 23)
- 31a: Befestigungsmittel (hier Schraube) von 30
- 31b: Gegenbefestigungsmittel (hier Öse) von 30
- 32, 33: Schlittenelement an 23 geführt an 27
- 34: (elastisch ausgebildetes) Rückstellelement
- 35: Führungslager (als Hülse ausgebildet)
- 36: Anzeigemittel
- 37: Abdeckung
- 38: Aktorik
- 39: Verbindungsmittel (als Schraubbolzen ausgebildet)

## Patentansprüche

1. Biegemaschine, insbesondere Abkantpresse, mit einer Oberwange (7) und einer Unterwange (9), wobei die Oberwange (7) in einer Arbeitsrichtung (z) der Biegemaschine (1) relativ zur Unterwange (9) bewegbar ist, um ein Werkstück, das über eine Vorderseite der Biegemaschine (1) zwischen Oberwange (7) und Unterwange (9) eingeführt ist, durch Biegen entlang einer Biegelinie umzuformen, die in einer Breitenrichtung (y) der Biegemaschine (1) verläuft, wobei die Biegemaschine (1) ein Sicherheitssystem (12) mit einem ersten Funktionselement (13a) und einem weiteren Funktionselement (13b) zur Überwachung eines Sicherheitsbereichs zwischen beiden Funktionselementen (13a, 13b) und zwischen Oberwange (7) und Unterwange (9) beinhaltet, wobei das Sicherheitssystem derart angeordnet ist, dass es der Bewegung der Oberwange (7) in der Arbeitsrichtung (z) folgt,
**dadurch gekennzeichnet, dass**
das erste Funktionselement (13a) und das weitere Funktionselement (13b) miteinander über ein flexibles Zugkraft-Übertragungsmittel (16) und eine Verstelleinrichtung (17) zur Positionsänderung der Funktionselemente (13a, 13b) mechanisch verbunden sind, wobei die Verstelleinrichtung (17) einen in Arbeitsrichtung (z) beweglich geführten Kopplungsabschnitt (23) beinhaltet, der mit dem flexiblen Zugkraft-Übertragungsmittel (16) gekoppelt ist, um eine Bewegung des Kopplungsabschnitts (23) zu einer Bewegung des flexiblen Zugkraft-Übertragungsmittels (16) umzusetzen, welche eine weg-identische Positionsänderung der Funktionselemente (13a, 13b) in der Arbeitsrichtung (z) relativ zur Oberwange (7) bewirkt.

2. Biegemaschine nach Anspruch 1, **dadurch gekennzeichnet, dass** der Kopplungsabschnitt (23) und das flexible Zugkraft-Übertragungsmittel (16) derart angeordnet sind, dass die Positionsänderung des ersten Funktionselements (13a) und des weiteren Funktionselements (13b) in der Arbeitsrichtung (z) relativ zur Oberwange (7) eine lineare Verschiebung des ersten Funktionselements (13a) und des weiteren Funktionselements (13b) entlang der Arbeitsrichtung (z) ist.

3. Biegemaschine nach Anspruch 1 oder 2, **dadurch gekennzeichnet, dass** das flexible Zugkraft-Übertragungsmittel (16) einen oder mehrere Abschnitte (16a, 16b) umfasst, wobei ein erster Abschnitt (16a) den Kopplungsabschnitt (23) mit dem ersten Funktionselement (13a) verbindet und ein weiterer Abschnitt (16b) den Kopplungsabschnitt (23) mit dem weiteren Funktionselement (13b) verbindet.

4. Biegemaschine nach einem der vorhergehenden Ansprüche, **dadurch gekennzeichnet, dass** das flexible Zugkraft-Übertragungsmittel (16) an der Rückseite (7b) der Oberwange (7) geführt ist, die von der Vorderseite der Biegemaschine (1) weg weist.

5. Biegemaschine nach Anspruch 4, , **dadurch gekennzeichnet, dass** zur Führung des flexiblen Zugkraft-Übertragungsmittels (16) ein oder mehrere Umlenkmittel (22, 22') vorgesehen sind, die auf der Rückseite (7b) der Oberwange (7) angeordnet sind.

6. Biegemaschine nach einem der vorhergehenden Ansprüche, **dadurch gekennzeichnet, dass** die Verstelleinrichtung (17) an der Oberwange (7) angeordnet ist, wobei der Kopplungsabschnitt (23) vorzugsweise an der Rückseite (7b) der Oberwange (7) angeordnet ist, oder dass die Verstelleinrichtung (17) seitlich versetzt in Breitenrichtung (y) neben der Oberwange (7) angeordnet ist, wobei die Verstelleinrichtung (17) vorzugsweise durch eine Abdeckung (37) abgedeckt ist.

7. Biegemaschine nach einem der vorhergehenden Ansprüche, **dadurch gekennzeichnet, dass** der Kopplungsabschnitt (23) linear und vorzugsweise in Arbeitsrichtung (z) der Biegemaschine (1) bewegbar ist, wobei die lineare Bewegung des Kopplungsabschnitts (23) ein Ende des Zugkraft-Übertragungsmittels (16), das mit dem ersten Funktionselement (13a) verbunden ist, um die gleiche Distanz in der Arbeitsrichtung (z) versetzt wie ein weiteres Ende des Zugkraft-Übertragungsmittels (16), das mit dem weiteren Funktionselement (13b) verbunden ist.

8. Biegemaschine nach einem der vorhergehenden Ansprüche, **dadurch gekennzeichnet, dass** die Verstelleinrichtung (17) eine manuelle Verstelleinrichtung ist, durch welche über eine mechanische Kraftausübung eines Bedieners die Bewegung des Kopplungsabschnitts (23) bewirkt wird.

9. Biegemaschine nach Anspruch 8, **dadurch gekennzeichnet, dass** die Verstelleinrichtung (17) ein zugfestes Stellelement (18) mit einer Handhabe (19) umfasst, das auf der Rückseite (7b) der Oberwange (7), mit dem dort befindlichen Kopplungsabschnitt (23) verbunden ist, wobei sich das zugfeste Stellelement (18) von der Rückseite (7b) der Oberwange (7) durch die Oberwange (7) hindurch und anschließend entlang der zur Rückseite (7b) entgegengesetzten Vorderseite (7a) der Oberwange (7) bis zu der Handhabe (19) erstreckt, wobei der Kopplungsabschnitt (23) durch Erhöhung und Verminderung der Zugkraft, die der Bediener über die Handhabe (19) auf das zugfeste Stellelement (18) ausübt, bewegbar ist.

10. Biegemaschine nach Anspruch 8 oder 9, **dadurch gekennzeichnet, dass** die Verstelleinrichtung (17) ein Arretierungsmittel (24, 26, 34) umfasst, mit dem der Bediener den Kopplungsabschnitt (23) in mehreren unterschiedlichen Positionen arretieren kann, wobei das Arretierungsmittel (24, 26, 34) aus einer arretierten Position durch den Bediener gelöst werden kann und anschließend nach Bewegung des Kopplungsabschnitts (23) in einer neuen Position durch den Bediener arretiert werden kann.

11. Biegemaschine nach Anspruch 10, **dadurch gekennzeichnet, dass** das Arretierungsmittel (24, 26, 34) ein vorzugsweise über die Vorderseite (7a) der Oberwange (7) betätigbares Positionierelement (24) zum Verrasten in verschiedenen definierten Rastpositionen des Kopplungsabschnitts (23) umfasst, wobei das Positionierelement (24) über ein Rückstellelement (34) in eine Arretierungslage vorgespannt ist.

12. Biegemaschine nach einem der Ansprüche 1 bis 7, **dadurch gekennzeichnet, dass** die Verstelleinrichtung (17) mittels einer Aktorik (38) betätigbar ist.

13. Biegemaschine nach einem der vorhergehenden Ansprüche, **dadurch gekennzeichnet, dass** ein Anzeigemittel (36) zur Visualisierung der Position des ersten Funktionselements (13a) und des weiteren Funktionselements (13b) in der Arbeitsrichtung vorgesehen ist.

14. Sicherheitssystem (12) für eine Biegemaschine (1), insbesondere Abkantpresse, die eine Oberwange (7) und eine Unterwange (9) umfasst, wobei die Oberwange (7) in einer Arbeitsrichtung (z) der Biegemaschine (1) relativ zur Unterwange (9) bewegbar ist, um ein Werkstück, das über eine Vorderseite der Biegemaschine (1) zwischen Oberwange (7) und Unterwange (9) eingeführt ist, durch Biegen entlang einer Biegelinie umzuformen, die in einer Breitenrichtung (y) der Biegemaschine (1) verläuft, wobei das Sicherheitssystem (12) ein erstes Funktionselement (13a) und ein weiteres Funktionselement (13b) zur Überwachung eines Sicherheitsbereichs zwischen beiden Funktionselementen (13a, 13b) und zwischen Oberwange (7) und Unterwange (9) der Biegemaschine beinhaltet, **dadurch gekennzeichnet, dass**
das erste Funktionselement (13a) und das weitere Funktionselement (13b) miteinander über ein flexibles Zugkraft-Übertragungsmittel (16) und eine Verstelleinrichtung (17) zur Positionsänderung der Funktionselemente (13a, 13b) mechanisch verbunden sind, wobei die Verstelleinrichtung (17) einen in Arbeitsrichtung (z) beweglich geführten Kopplungsabschnitt (23) beinhaltet, der mit dem flexiblen Zugkraft-Übertragungsmittel (16) gekoppelt ist, um eine Bewegung des Kopplungsabschnitts (23) zu einer Bewegung des flexiblen Zugkraft-Übertragungsmittels (16) umzusetzen, welche eine weg-identische Positionsänderung der Funktionselemente (13a, 13b) in der Arbeitsrichtung (z) relativ zur Oberwange (7) bewirkt.

15. Sicherheitssystem (12) nach Anspruch 14, **dadurch gekennzeichnet, dass** das Sicherheitssystem (12) zur Verwendung in einer Biegemaschine nach einem der Ansprüche 1 bis 13 eingerichtet ist.
